# EUROPÄISCHE PATENTSCHRIFT

(11) **EP 2 563 653 B1**
(45) Veröffentlichungstag und Bekanntmachung des Hinweises auf die Patenterteilung: **04.01.2017**
(21) Anmeldenummer: 11717948.1
(22) Anmeldetag: 26.04.2011
(51) Int. Cl.: B64C 1/20, B64F 5/00

(54) **SCHIENENSYSTEM UND VERFAHREN SOWIE SYSTEM ZUR MONTAGE EINER KOMPONENTE IN EINEM FLUGZEUG**
RAIL SYSTEM AND METHOD AND SYSTEM FOR MOUNTING A COMPONENT IN AN AIRCRAFT
SYSTÈME DE RAILS, ET PROCÉDÉ ET SYSTÈME POUR MONTER UNE PIÈCE DANS UN AVION

(30) Priorität: 26.04.2010 US 327813 P; 26.04.2010 DE 102010018272
(43) Veröffentlichungstag der Anmeldung: 06.03.2013
(73) Patentinhaber: Airbus Operations GmbH, 21129 Hamburg (DE)
(72) Erfinder: UMLAUFT, Sebastian, 22767 Hamburg (DE); KOBLITZ, Ralf, 21129 Hamburg (DE); HALFMANN, Niklas, 20357 Hamburg (DE); KRAUSE, Dieter, 21244 Buchholz (DE); BLEES, Christoph, 20251 Hamburg (DE)
(74) Vertreter: Schicker, Silvia
(86) Internationale Anmeldenummer: PCT/EP2011/002087
(87) Internationale Veröffentlichungsnummer: WO 2011/134640

(56) Entgegenhaltungen:
- EP-A1- 2 062 815
- DE-U1-202004 007 781
- GB-A- 2 419 854

## Beschreibung

Die Erfindung betrifft ein Schienensystem, das zur Verwendung bei der Montage einer Komponente, insbesondere einer Interieurkomponente oder eines Interieurkomponentenmoduls in einem Flugzeug geeignet ist. Ferner betrifft die Erfindung ein Verfahren und ein System zur Montage einer Komponente, insbesondere einer Interieurkomponente in einem Flugzeug.

Bei der Montage von Komponenten, insbesondere Interieurkomponenten in einem Flugzeug ist es derzeit üblich, Bauteile, wie z.B. Dadopaneele, Seitenverkleidungen, Deckenverkleidungen, Lichtbänder, Gepäckfächer und dergleichen einzeln mit der Flugzeugstruktur zu verbinden. Da jedes Bauteil separat positioniert und an der Flugzeugstruktur befestigt werden muss, ist die Montage dieser Bauteile sehr zeitaufwendig. In ähnlicher Weise werden derzeit auch beispielsweise als luftführende Leitungen einer Flugzeugklimaanlage oder der Wasserversorgung in einer Flugzeugkabine dienende Rohrleitungen sowie elektrische Leitungen in zeitaufwändiger Weise einzeln an der Flugzeugstruktur befestigt. Nach der Montage muss im Rahmen einer Endkontrolle die ordnungsgemäße Funktion aller Leitungen überprüft werden. Insbesondere müssen alle Rohrleitungen einer Dichtigkeitsprüfung unterzogen werden, während bei den elektrischen Leitungen eine Überprüfung aller Schnittstellen erforderlich ist. Diese Tests sind ebenfalls verhältnismäßig aufwändig, da die zu prüfenden Leitungen und Schnittstellen im montierten Zustand der Leitungen häufig nur schwer zugänglich sind.

Aus diesem Grund gibt es Bestrebungen, zur Montage in einem Flugzeug vorgesehene Komponenten, beispielsweise zur Montage in einer Flugzeugkabine, vorgesehene Interieurkomponenten so umfassend wie möglich außerhalb des Flugzeugs vorzumontieren und zu testen. Insbesondere sollen Großmodule, die mehrere Überkopfgepäckfächer, mehrere Seitenverkleidungspaneele sowie weitere Interieurkomponenten, wie z.B. elektrische Leitungen, luftführende Leitungen einer Flugzeugklimaanlage oder der Wasserversorgung in der Flugzeugkabine dienende Rohrleitungen, Personal Service Units und Personal Service Channels umfassen können, ggf. mit Hilfe einer entsprechenden, in der nicht vorveröffentlichten DE 10 2009 023 391 beschriebenen Montagevorrichtung außerhalb des Flugzeugs vormontiert und getestet werden. Anschließend sollen die Großmodule, beispielsweise mittels einer in der ebenfalls nicht vorveröffentlichten DE 10 2009 023 393 beschriebenen Transportvorrichtung, in eine Endmontageposition in einem Flugzeugrumpfelement transportiert werden.

Aus der EP 2 062 815 A1, die als nächstliegender Stand der Technik angesehen wird, ist ein Schienensystem zur Befestigung von Sitzen in der Passagierkabine eines Flugzeugs bekannt. Das Schienensystem umfasst zwei Schienenelemente, die jeweils mit einer in einem Boden der Passagierkabine eingelassenen Befestigungsschiene verbindbar sind, um die Schienenelemente am Boden der Passagierkabine zu fixieren. Die Schienenelemente sind jeweils mit zwei Führungsnuten versehen, die dazu vorsehen sind, eine mit einem Passagiersitz verbundene Montagevorrichtung zur Verbindung des Passagiersitzes mit den Schienenelementen verschiebbar aufzunehmen.

Die Erfindung ist auf die Aufgabe gerichtet, ein Schienensystem bereitzustellen, das es ermöglicht, ein bei der Montage einer Komponente, insbesondere einer Interieurkomponente oder eines Interieurkomponentenmoduls in einem Flugzeug eingesetztes Montagehilfsmittel, wie zum Beispiel eine in der DE 10 2009 023 393 beschriebenen Transportvorrichtung, aber auch ein anderes Montagehilfsmittel, in einem definierten Abstand von einer Flugzeugstruktur in das Flugzeugrumpfelement einzufahren. Ferner ist die Erfindung ist auf die Aufgabe gerichtet, ein Verfahren und ein System zur Montage einer Komponente, insbesondere einer Interieurkomponente oder eines Interieurkomponentenmoduls in einem Flugzeug unter Verwendung eines derartigen Schienensystems anzugeben.

Diese Aufgabe wird durch ein Schienensystem zur Verwendung bei der Montage einer Komponente, insbesondere einer Interieurkomponente in einem Flugzeug mit den Merkmalen des Anspruchs 1, ein Verfahren zur Montage einer Komponente, insbesondere einer Interieurkomponente in einem Flugzeug mit den Merkmalen des Anspruchs 12 sowie ein System zur Montage einer Komponente, insbesondere einer Interieurkomponente in einem Flugzeug mit den Merkmalen des Anspruchs 14 gelöst.

Das erfindungsgemäße Schienensystem umfasst ein erstes Schienenelement mit einer Befestigungsvorrichtung, die komplementär zu einer im Bereich eines Bodens eines Flugzeugrumpfelements vorgesehenen ersten Befestigungsvorrichtung ausgebildet und dazu eingerichtet ist, mit der im Bereich des Bodens des Flugzeugrumpfelements vorgesehenen ersten Befestigungsvorrichtung zusammenzuwirken, um das erste Schienenelement lösbar im Bereich des Bodens des Flugzeugrumpfelements zu befestigen wobei ein Abschnitt des ersten Schienenelements im mit dem Flugzeugrumpfelement verbundenen Zustand des ersten Schienenelements über einen Rand des Bodens des Flugzeugrumpfelements hinausragt. Der über den Rand des Bodens des Flugzeugrumpfelements hinausragende Abschnitt des ersten Schienenelements kann sich beispielsweise über einen Boden einer Montagehalle oder dergleichen erstrecken und dort gegebenenfalls adäquat befestigt sein. Das Flugzeugrumpfelement kann beispielsweise eine an mindestens einer Stirnseite offener Rumpfschale sein. Alternativ dazu kann das erfindungsgemäße Schienensystem jedoch auch dazu vorgesehen sein, in einen nahezu vollständig oder vollständig aufgebauten Flugzeugrumpf eingebracht zu werden. Wesentlich ist lediglich, dass das Flugzeugrumpfelement einen Zugang aufweist, der das Einbringen des Schienensystems sowie der zur Montage in dem Flugzeugrumpfelement vorgesehene Komponente in das Flugzeugrumpfelement ermöglicht.

Die erste Befestigungsvorrichtung kann beispielsweise im Bereich einer Oberfläche einer Bodenplatte angeordnet sein, die in dem Flugzeugrumpfelement angeordnet und dazu vorgesehen ist, einen Kabinenboden zu bilden. Durch das Zusammenwirken der Befestigungsvorrichtung des ersten Schienenelements mit der an dem Flugzeugrumpfelement vorgesehenen ersten Befestigungsvorrichtung kann das erste Schienenelement temporär im Bereich des Bodens des Flugzeugelements befestigt und, wenn es nicht mehr benötigt wird, wieder demontiert werden.

Ferner umfasst das erste Schienenelement des Schienensystems eine Führungseinrichtung, die komplementär zu einer an einem in das Flugzeugrumpfelement einzufahrenden Montagehilfsmittel vorgesehenen ersten Führungseinrichtung ausgebildet und dazu eingerichtet ist, mit der an dem in das Flugzeugrumpfelement einzufahrenden Montagehilfsmittel vorgesehenen ersten Führungseinrichtung zusammenzuwirken, um eine geführte Verschiebung des in das Flugzeugrumpfelement einzufahrenden Montagehilfsmittels relativ zu dem Schienensystem zu ermöglichen. Bei dem in das Flugzeugrumpfelement einzufahrenden Montagehilfsmittel kann es sich z.B. um eine in der DE 10 2009 023 393 beschriebene Transportvorrichtung, aber auch ein anderes Montagehilfsmittel handeln.

Ferner umfasst das erfindungsgemäße Schienensystem ein zweites Schienenelement mit einer Befestigungsvorrichtung, die komplementär zu einer im Bereich des Bodens des Flugzeugrumpfelements vorgesehenen zweiten Befestigungsvorrichtung ausgebildet und dazu eingerichtet ist, mit der im Bereich des Bodens des Flugzeugrumpfelements vorgesehenen zweiten Befestigungsvorrichtung zusammenzuwirken, um das zweite Schienenelement lösbar im Bereich des Bodens des Flugzeugrumpfelements zu befestigen, wobei ein Abschnitt des zweiten Schienenelements im mit dem Flugzeugrumpfelement verbundenen Zustand des zweiten Schienenelements über einen Rand des Bodens des Flugzeugrumpfelements hinausragt. Der über den Rand des Bodens des Flugzeugrumpfelements hinausragende Abschnitt des zweiten Schienenelements kann sich beispielsweise über einen Boden einer Montagehalle oder dergleichen erstrecken und dort gegebenenfalls adäquat befestigt sein. Ähnlich wie die erste Befestigungsvorrichtung kann auch die zweite Befestigungsvorrichtung des Flugzeugrumpfelements im Bereich einer Oberfläche einer Bodenplatte angeordnet sein, die in dem Flugzeugrumpfelement angeordnet und dazu vorgesehen ist, einen Kabinenboden zu bilden. Durch das Zusammenwirken der Befestigungsvorrichtung des zweiten Schienenelements mit der zweiten Befestigungsvorrichtung des Flugzeugrumpfelements kann das zweite Schienenelement, ebenso wie das erste Schienenelement, temporär im Bereich des Bodens des Flugzeugrumpfelements befestigt und auf einfache Art und Weise wieder aus seiner Position gelöst werden, wenn es nicht mehr benötigt wird.

Schließlich ist auch das zweite Schienenelement mit einer Führungseinrichtung versehen, die komplementär zu einer an einem in das Flugzeugrumpfelement einzufahrenden Montagehilfsmittel vorgesehenen zweiten Führungseinrichtung ausgebildet und dazu eingerichtet ist, mit der an demr in das Flugzeugrumpfelement einzufahrenden Montagehilfsmittel vorgesehenen zweiten Führungseinrichtung zusammenzuwirken, um eine geführte Verschiebung des in das Flugzeugrumpfelement einzufahrenden Montagehilfsmittels relativ zu dem Schienensystem zu ermöglichen.

Mit Hilfe des erfindungsgemäßen Schienensystems kann beispielsweise eine in der DE 10 2009 023 393 beschriebene Transportvorrichtung, aber auch ein anderes Montagehilfsmittel, auf einfache und komfortable Art und Weise in einem definierten Abstand von einer Flugzeugstruktur in das Flugzeugrumpfelement eingefahren werden. Beschädigungen der Flugzeugstruktur, der Transportvorrichtung, des anderen Montagehilfsmittels oder der zu montierenden Komponente werden dadurch zuverlässig vermieden. Ferner kann durch eine entsprechende Positionierung des Schienensystems die zu montierende Komponente auf einfache Art und Weise reproduzierbar in eine geeignete Montageposition gebracht werden. Schließlich ist das erfindungsgemäße Schienensystem einfach und flexibel einsetzbar, da die einzelnen Schienenelement des Schienensystems einfach und rasch in dem Flugzeugrumpfelement installiert bzw. wieder aus dem Flugzeugrumpfelement entfernt werden können. Durch den Einsatz des erfindungsgemäßen Schienensystems kann somit der Prozess zur Montage einer Komponente, insbesondere einer Interieurkomponente in einem Flugzeug insgesamt vereinfacht und effizienter gestaltet werden.

Grundsätzlich kann/können das erste und/oder das zweite Schienenelement des Schienensystems einteilig ausgeführt sein. Alternativ dazu kann das erste Schienenelement jedoch auch zweiteilig ausgebildet sein, wobei ein Abschnitt des ersten Schienenelements im mit dem Flugzeugrumpfelement verbundenen Zustand des ersten Schienenelements vollständig in dem Flugzeugrumpfelement aufgenommen ist und ein Abschnitt des ersten Schienenelements über den Rand des Bodens des Flugzeugrumpfelements hinausragt und sich beispielsweise über einen Boden einer Montagehalle oder dergleichen erstreckt. Ferner kann das zweite Schienenelement zweiteilig ausgebildet sein, wobei ein Abschnitt des zweiten Schienenelements im mit dem dem Flugzeugrumpfelement verbundenen Zustand des zweiten Schienenelements vollständig in dem Flugzeugrumpfelement aufgenommen ist und ein Abschnitt des zweiten Schienenelements über den Rand des Bodens des Flugzeugrumpfelements hinausragt und sich beispielsweise über einen Boden einer Montagehalle oder dergleichen erstreckt.

Vorzugsweise ist die Befestigungsvorrichtung des ersten Schienenelements komplementär zu einer im Bereich des Bodens des Flugzeugrumpfelements vorgesehenen und in Form einer Sitzschiene ausgeführten ersten Befestigungsvorrichtung ausgebildet. Alternativ oder zusätzlich dazu kann auch die Befestigungsvorrichtung des zweiten Schienenelements komplementär zu einer im Bereich des Bodens des Flugzeugrumpfelements vorgesehenen und in Form einer Sitzschiene ausgeführten zweiten Befestigungsvorrichtung ausgebildet sein. Das erste und/oder das zweite Schienenelement des erfindungsgemäßen Schienensystems kann/können dann zumindest abschnittsweise auf einfache Art und Weise in dem Flugzeugrumpfelement installiert werden, ohne dass die Bereitstellung einer separaten ersten und/oder zweiten Befestigungsvorrichtung an dem Flugzeugrumpfelement erforderlich ist.

Das erste Schienenelement kann einen Grundkörper umfassen, an dem die Befestigungsvorrichtung des ersten Schienenelements angebracht ist. Alternativ oder zusätzlich dazu kann auch das zweite Schienenelement einen Grundkörper umfassen, an dem die Befestigungsvorrichtung des zweiten Schienenelements angebracht ist. Der Grundkörper des ersten und/oder des zweiten Schienenelements kann beispielsweise in Form eines langgestreckten Quaders ausgebildet sein. Die Befestigungsvorrichtung kann beispielsweise im Bereich einer Oberfläche des Grundkörpers angebracht sein, die im in dem Flugzeugrumpfelement montierten Zustand des ersten und/oder des zweiten Schienenelements der ersten bzw. der zweiten Befestigungsvorrichtung des Flugzeugrumpfelements zugewandt ist. Beispielsweise können an der Oberfläche des Grundkörpers, die im in dem Flugzeugrumpfelement montierten Zustand des ersten und/oder des zweiten Schienenelements der ersten bzw. zweiten Befestigungsvorrichtung des Flugzeugrumpfelements zugewandt ist, eine Mehrzahl von Vorsprüngen vorgesehen sein, die zur Aufnahme in einer die erste und/oder die zweite Befestigungsvorrichtung des Flugzeugrumpfelements bildenden Sitzschiene vorgesehen sind.

Bei einer bevorzugten Ausführungsform des erfindungsgemäßen Schienensystems umfasst das erste Schienenelement ein Trägerelement, das über mindestens ein Verbindungselement mit dem Grundkörper des ersten Schienenelements verbunden ist. Alternativ oder zusätzlich dazu kann auch das zweite Schienenelement ein Trägerelement umfassen, das über mindestens ein Verbindungselement mit dem Grundkörper des zweiten Schienenelements verbunden ist.

Das Trägerelement des ersten Schienenelements kann sich beispielsweise im Wesentlichen parallel zu dem Grundkörper des ersten Schienenelements erstrecken. Alternativ oder zusätzlich dazu kann sich das Trägerelement des zweiten Schienenelements im Wesentlichen parallel zu dem Grundkörper des zweiten Schienenelements erstrecken.

Die Führungseinrichtung des ersten Schienenelements kann an dem Grundkörper und/oder dem Trägerelement des ersten Schienenelements angebracht sein. Alternativ oder zusätzlich dazu kann die Führungseinrichtung des zweiten Schienenelements an dem Grundkörper und/oder dem Trägerelement des zweiten Schienenelements angebracht sein. Ein Schienenelement, das kein Trägerelement umfasst, und dessen Führungseinrichtung an dem Grundkörper des Schienenelements angebracht ist, zeichnet sich durch einen besonders einfachen Aufbau aus. Ein mit einem eine Führungseinrichtung tragenden Trägerelement ausgestattetes Schienenelement ermöglicht es dagegen, die Führungseinrichtung in einer Position in dem Flugzeugrumpfelement anzuordnen, die von der Position der in dem Flugzeugrumpfelement vorgesehenen ersten und/oder zweiten Befestigungseinrichtung losgelöst ist. Dadurch kann der Abstand der an dem ersten und dem zweiten Schienenelement des Schienenelements vorgesehenen Führungseinrichtungen voneinander flexibel an den Abstand der an dem in das Flugzeugrumpfelement einzufahrenden Montagehilfsmittel vorgesehenen ersten und zweiten Führungseinrichtungen angepasst werden. Vorzugsweise ist bei einem zweiteilig ausgebildeten ersten und/oder zweiten Schienenelement nur der Abschnitt des Schienenelements mit einem Trägerelement versehen, der im mit dem Flugzeugrumpfelement verbundenen Zustand des ersten und/oder zweiten Schienenelements vollständig in dem Flugzeugrumpfelement aufgenommen ist.

Je nach Bedarf, können sowohl das erste als auch das zweite Schienenelement des Schienensystems ohne Trägerelement ausgestaltet und mit einer an dem Grundkörper des Schienenelements angebrachten Führungseinrichtung versehen sein. Eine derartige Ausgestaltung des Schienensystems bietet sich beispielsweise dann an, wenn als an dem Flugzeugrumpfelement vorgesehene erste und zweite Befestigungseinrichtungen zwei in eine Bodenplatte des Flugzeugrumpfelements eingelassene Sitzschienen benutzt werden und der Abstand der an der in das Flugzeugrumpfelement einzufahrenden Einrichtung vorgesehenen ersten und zweiten Führungseinrichtungen dem Abstand der Sitzschienen in dem Flugzeugrumpfelement entspricht. Alternativ dazu können sowohl das erste Schienenelement als auch das zweite Schienenelement mit einem Trägerelement sowie einer an dem Trägerelement angebrachten Führungseinrichtung versehen sein, wenn der Abstand der an dem in das Flugzeugrumpfelement einzufahrenden Montagehilfsmittel vorgesehenen ersten und zweiten Führungseinrichtung größer oder kleiner ist als ein Abstand von die erste und die zweite Befestigungsvorrichtung des Flugzeugrumpfelements bildenden, in eine Bodenplatte des Flugzeugrumpfelements integrierten Sitzschienen.

Schließlich ist auch eine Konfiguration denkbar, bei der ein Schienenelement lediglich einen Grundkörper sowie eine an dem Grundkörper angebrachte Führungseinrichtung und das andere Schienenelement ein Trägerelement und eine an dem Trägerelement angebrachte Führungseinrichtung umfasst. Bei einer derartigen Ausgestaltung des erfindungsgemäßen Schienensystems kann zumindest ein Schienenelement einfach gestaltet sein und dennoch der Abstand der an den Schienenelementen vorgesehenen Führungseinrichtungen vom Abstand der die erste und die zweite Befestigungseinrichtung des Flugzeugrumpfelements bildenden, in der Bodenplatte des Flugzeugrumpfelements vorgesehenen Sitzschienen entkoppelt werden.

Falls gewünscht, kann/können das erste und/oder das zweite Schienenelement ferner auch so gestaltet sein, dass sowohl der Grundköper als auch ein Trägerelement des ersten und/oder des zweiten Schienenelements eine Führungseinrichtung trägt. Ein derartiges Design des Schienensystems bietet sich insbesondere dann an, wenn an dem in das Flugzeugrumpfelement einzufahrenden Montagehilfsmittel mehr als zwei Führungseinrichtungen vorgesehen sind.

Die Führungseinrichtung des ersten Schienenelements und/oder die Führungseinrichtung des zweiten Schienenelements kann/können eine Führungsschiene umfassen, die dazu eingerichtet ist, mit einer Rolle der an dem in das Flugzeugrumpfelement einzufahrenden Montagehilfsmittel vorgesehenen ersten und/oder zweiten Führungseinrichtung in Eingriff zu gelangen. Die Rolle kann beispielsweise im Bereich ihrer Umfangsfläche mit einer Nut versehen sein. Die Führungsschiene der Führungseinrichtung des ersten und/oder des zweiten Schienenelements weist dann vorzugsweise einen Querschnitt auf, dessen Form an die Form der in die Umfangsfläche der eingebrachten Nut angepasst ist. Beispielsweise kann die Führungsschiene einen Querschnitt in Form eines abgeflachten Kreises oder eines Halbkreises aufweisen.

Das erfindungsgemäße Schienensystem umfasst ferner vorzugsweise ein Anschlagelement, das dazu eingerichtet ist, im in einem Flugzeugrumpfelement montierten Zustand des Schienenelements mit dem in das Flugzeugrumpfelement einzufahrenden Montagehilfsmittel zusammenzuwirken, um die geführte Verschiebung des in das Flugzeugrumpfelement einzufahrenden Montagehilfsmittelsrelativ zu dem Schienensystem zu begrenzen. Das Anschlagelement ist vorzugsweise mittels einer Montagevorrichtung in verschiedenen Positionen an dem Schienensystem befestigbar. Die Montagevorrichtung kann beispielsweise in Form einer Montageschiene ausgebildet sein, die sich im Wesentlichen parallel zu dem ersten und/oder dem zweiten Schienenelement erstreckt. Bei einer derartigen Ausgestaltung der Montagevorrichtung kann das Anschlagelement auf einfache und komfortable Art und Weise in verschiedenen Positionen entlang einer Längsachse des Schienensystems fixiert werden.

Beispielsweise kann die Montagevorrichtung an einem Verbindungselement zur Verbindung des Grundkörpers des ersten und/oder des zweiten Schienenelements mit dem Trägerelement des ersten und/oder des zweiten Schienenelements angebracht sein.

Das erste und/oder das zweite Schienenelement kann/können über seine/ihre gesamte Länge eine im Wesentlichen gerade Grundform aufweisen. Falls gewünscht, kann/können das erste und/oder das zweite Schienenelement jedoch auch zumindest abschnittsweise eine gekrümmte Grundform aufweisen. Indem das erste und/oder das zweite Schienenelement zumindest abschnittsweise gekrümmt ausgebildet werden, kann das Schienensystem z.B. mit einem sich im Wesentlichen senkrecht zu einer Längsachse des Flugzeugrumpfelements erstreckenden ersten Abschnitt, einem gekrümmten zweiten Abschnitt sowie einem sich im Wesentlichen parallel zu der Längsachse des Flugzeugrumpfelements erstreckenden dritten Abschnitt ausgestattet werden. Dadurch können die Schienenelemente des Schienensystems z.B. durch eine in dem Flugzeugrumpfelement ausgebildete Seitentür in das Flugzeugrumpfelement hineingeführt und anschließend in dem Flugzeugrumpfelement parallel zur Längsachse des Flugzeugrumpfelements geführt werden.

Bei einem erfindungsgemäßen Verfahren zur Montage einer Komponente, insbesondere einer Interieurkomponente in einem Flugzeug werden das erste und das zweite Schienenelement des oben beschriebenen Schienensystems in einem Flugzeugrumpfelement befestigt. Anschließend wird ein Montagehilfsmittel, beispielsweise eine in der DE 10 2009 023 393 beschriebene Transportvorrichtung oder ein anderes Montagehilfsmittel in das Flugzeugrumpfelement eingefahren. Dabei wirkt die an dem in das Flugzeugrumpfelement einzufahrenden Montagehilfsmittel vorgesehene erste Führungseinrichtung mit der komplementären Führungseinrichtung des ersten Schienenelements zusammen. Ferner wirkt die an dem in das Flugzeugrumpfelement einzufahrenden Montagehilfsmittel vorgesehene zweite Führungseinrichtung mit der komplementären Führungseinrichtung des zweiten Schienenelements zusammen. Dadurch wird eine geführte Verschiebung des in das Flugzeugrumpfelement einzufahrenden Montagehilfsmittels relativ zu dem Schienensystem ermöglicht.

Bei einer bevorzugten Ausführungsform des Verfahrens wird die Komponente mit Hilfe des Montagehilfsmittels in dem Flugzeugrumpfelement montiert. Anschließend wird das Montagehilfsmittel aus dem Flugzeugrumpfelement herausgefahren, wobei die an dem aus dem Flugzeugrumpfelement herauszufahrenden Montagehilfsmittel vorgesehene erste Führungseinrichtung mit der komplementären Führungseinrichtung des ersten Schienenelements zusammenwirkt und die an dem aus dem Flugzeugrumpfelement herauszufahrenden Montagehilfsmittel vorgesehene zweite Führungseinrichtung mit der komplementären Führungseinrichtung des zweiten Schienenelements zusammenwirkt, um eine geführte Verschiebung des aus Flugzeugrumpfelement herauszufahrenden Montagehilfsmittels relativ zu dem Schienensystem zu ermöglichen. Schließlich werden das erste und das zweite Schienenelement des Schienensystems von dem Flugzeugrumpfelement gelöst.

Ein erfindungsgemäßes System zur Montage einer Komponente in einem Flugzeug umfasst ein oben beschriebenes Schienensystem sowie ein zum Zusammenwirken mit dem Schienensystem ausgebildetes Montagehilfsmittel.

Vorzugsweise ist das Montagehilfsmittel in Form eines Transportwagens zum Transport der Komponente in ein Flugzeugrumpfelement ausgebildet.

Die Erfindung wird nun mit Bezugnahme auf die beigefügten, schematischen Zeichnungen näher erläutert, von denen
- Figur 1: ein zur Verwendung bei der Montage einer Komponente in einem Flugzeug geeignetes Schienensystem bei seiner Installation an einem Flugzeugrumpfelement zeigt,
- Figur 2: das in Figur 1 veranschaulichte Schienensystem im in dem Flugzeugrumpfelement installierten Zustand zeigt,
- Figuren 3a bis c: verschiedene Ansichten eines Abschnitts eines ersten Schienenelements des Schienensystems gemäß Figur 1 zeigen,
- Figuren 4a und b: die Installation des in den Figuren 3a bis c veranschaulichten Abschnitts des ersten Schienenelements in dem Flugzeugrumpfelement zeigen,
- Figuren 5a bis c: verschiedene Ansichten eines Abschnitts eines zweiten Schienenelements des Schienensystems gemäß Figur 1 zeigen,
- Figur 6: die Installation des in den Figuren 5a bis c veranschaulichten Abschnitts des zweiten Schienenelements in dem Flugzeugrumpfelement zeigt, d
- Figur 7: das Einfahren einer Transportvorrichtung zum Transport einer in dem Flugzeugrumpfelement zu montierenden Komponente in das Flugzeugrumpfelement unter Verwendung des Schienensystems gemäß Figur 1 zeigt, und
- Figur 8: ein weiteres zur Verwendung bei der Montage einer Komponente in einem Flugzeug geeignetes Schienensystem im in einem Flugzeugrumpfelement installierten Zustand zeigt.

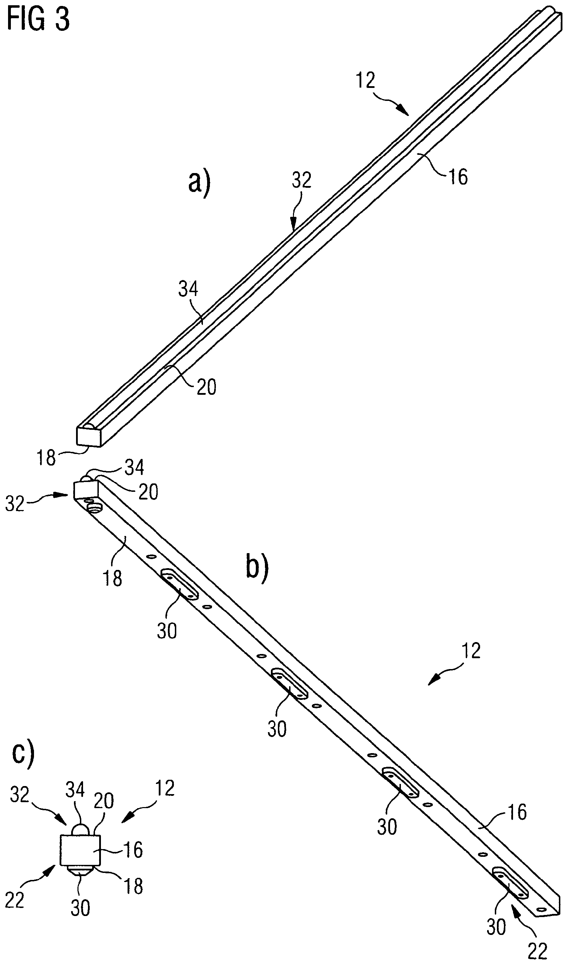

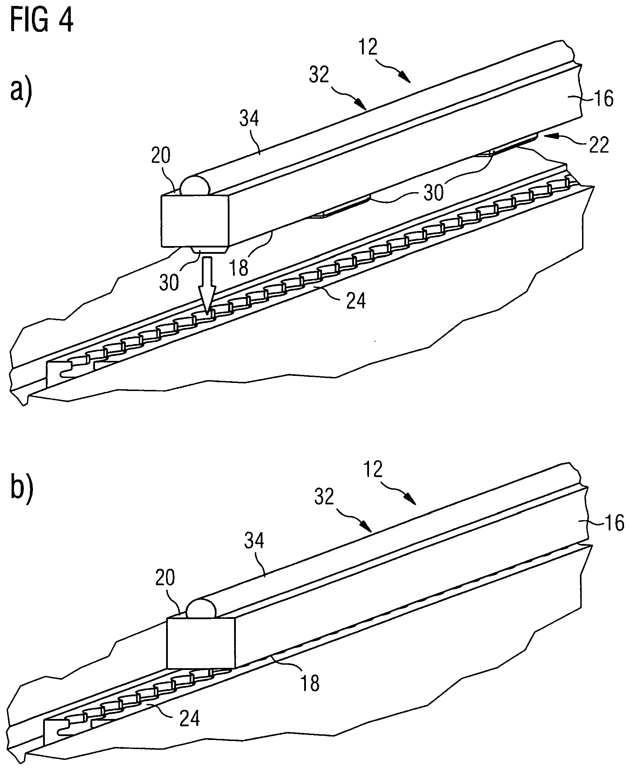

Ein zur Verwendung bei der Montage einer Komponente in einem Flugzeug geeignetes Schienensystem 10 umfasst ein erstes Schienenelement 12 sowie ein zweites Schienenelement 14. Das erste Schienenelement 12 ist, ebenso wie das zweite Schienenelement 14, zweitteilig ausgebildet. Das insbesondere in den Figuren 3a bis c und 4a bis b detailliert veranschaulichte erste Schienenelement 12 umfasst einen in Form eines langgestreckten Quaders ausgebildeten Grundkörper 16. Der Grundkörper 16 des ersten Schienenelements 12 weist eine erste Oberfläche 18 sowie eine der ersten Oberfläche gegenüberliegende zweite Oberfläche 20 auf.

Im Bereich der ersten Oberfläche 18 des Grundkörpers 16 ist eine Befestigungsvorrichtung 22 angeordnet. Wie am besten in den Figuren 4a bis b zu erkennen ist, ist die Befestigungsvorrichtung 22 des ersten Schienenelements 12 komplementär zu einer in Form einer Sitzschiene ausgeführten ersten Befestigungsvorrichtung 24 ausgebildet, die in eine Bodenplatte 26 eines Flugzeugrumpfelements 28 integriert ist. Insbesondere weist die Befestigungsvorrichtung 22 des ersten Schienenelements 12 eine Mehrzahl von Vorsprüngen 30 auf, die dazu vorgesehen sind, in der in Form einer Sitzschiene ausgebildeten ersten Befestigungsvorrichtung 24 des Flugzeugrumpfelements 28 aufgenommen zu werden, um das erste Schienenelement 12 im Bereich eines Bodens des Flugzeugrumpfelements 28, d.h. an der Bodenplatte 26 des Flugzeugrumpfelements 28 zu befestigen.

Die zweite Oberfläche 20 des Grundkörpers 16 des ersten Schienenelements 12 trägt dagegen eine Führungseinrichtung 32, die eine sich parallel zu dem Grundkörper 16 erstreckende Führungsschiene 34 umfasst. Wie am besten in den Figuren 3a und 4a bis b zu erkennen ist, erstreckt sich die Führungsschiene 34 über die gesamte Länge des Grundkörpers 16 des ersten Schienenelements 12 und weist einen in Form eines abgeflachten Kreises ausgebildeten Querschnitt auf.

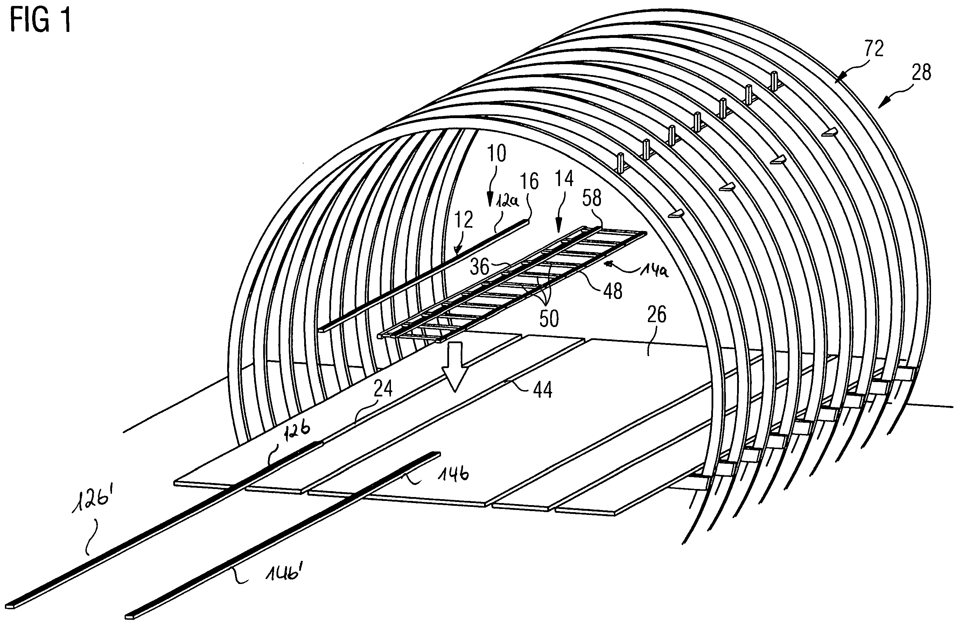

Ein Abschnitt 12a des ersten Schienenelements 12, der in Figur 1 noch nicht mit dem Flugzeugrumpfelement 28 verbunden ist, ist dazu eingerichtet, vollständig in dem Flugzeugrumpfelement 28 aufgenommen zu werden. Ein Abschnitt 12b des ersten Schienenelements 12, der in Figur 1 bereits mit dem Flugzeugrumpfelement 28 verbunden ist, weist dagegen einen Abschnitt 12b' auf, der im mit dem Flugzeugrumpfelement 28 verbundenen Zustand des ersten Schienenelements 12 über einen Rand des Flugzeugrumpfelements 28 hinausragt.

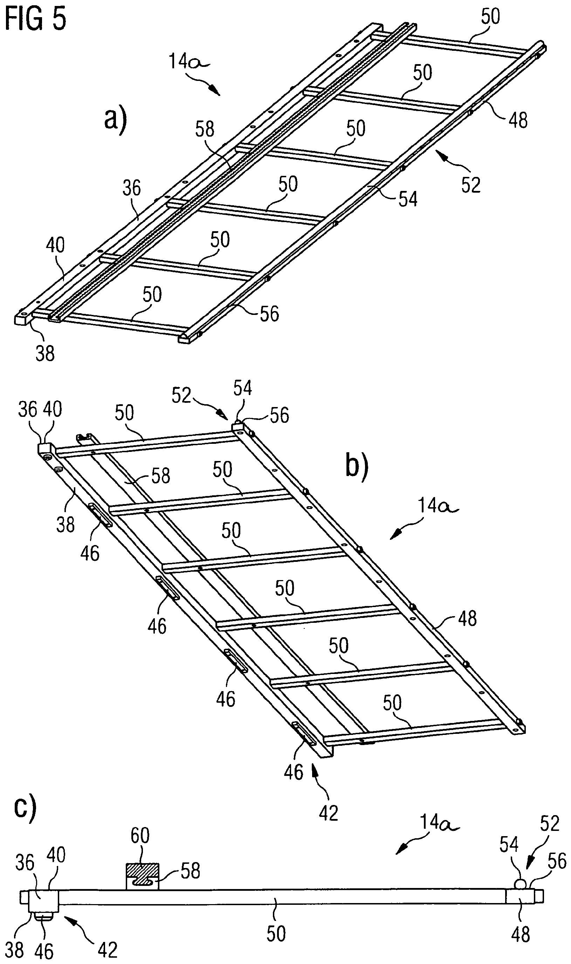

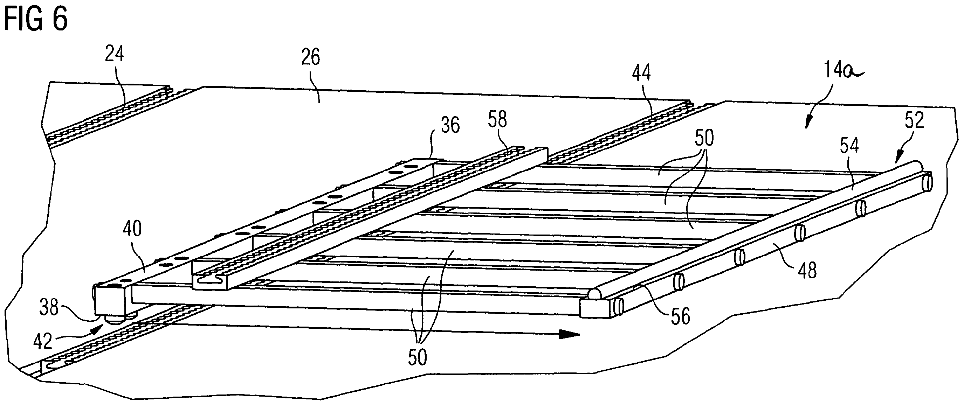

Das insbesondere in den Figuren 5a bis c und 6 detailliert veranschaulichte zweite Schienenelement 14 umfasst, ebenso wie das erste Schienenelement 12, einen in Form eines langgestreckten Quaders ausgebildeten Grundkörper 36 mit einer ersten Oberfläche 38 sowie einer der ersten Oberfläche 38 gegenüberliegenden zweiten Oberfläche 40. Ähnlich wie das erste Schienenelement 12 ist auch das zweite Schienenelement 14 im Bereich der ersten Oberfläche 38 des Grundkörpers 36 mit einer Befestigungsvorrichtung 42 versehen, die dazu vorgesehen ist, mit einer in Form einer Sitzschiene ausgebildeten und in die Bodenplatte 26 des Flugzeugrumpfelements 28 integrierten zweiten Befestigungsvorrichtung 44 zusammenzuwirken. Ebenso wie die Befestigungsvorrichtung 22 des ersten Schienenelements 12 weist auch die Befestigungsvorrichtung 42 des zweiten Schienenelements 14 eine Mehrzahl von Vorsprüngen 46 auf, die dazu vorgesehen sind, in der in Form einer Sitzschiene ausgebildeten zweiten Befestigungsvorrichtung 44 des Flugzeugrumpfelements 28 aufgenommen zu werden.

Ferner ist auch ein Abschnitt 14a des zweiten Schienenelements 14, der in Figur 1 noch nicht mit dem Flugzeugrumpfelement 28 verbunden ist, dazu eingerichtet, vollständig in dem Flugzeugrumpfelement 28 aufgenommen zu werden. Ein Abschnitt 14b des zweiten Schienenelements 14, der in Figur 1 bereits mit dem Flugzeugrumpfelement 28 verbunden ist, weist dagegen einen Abschnitt 14b' auf, der im mit dem Flugzeugrumpfelement 28 verbundenen Zustand des zweiten Schienenelements 14 über einen Rand des Flugzeugrumpfelements 28 hinausragt.

Das zweite Schienenelement 14 unterscheidet sich von dem ersten Schienenelement 12 durch ein Trägerelement 48, das, ebenso wie der Grundkörper 36 des zweiten Schienenelements 14, in Form eines langgestreckten Quaders ausgebildet ist und sich entlang des Abschnitts 14a des zweiten Schienenelements 14 im Wesentlichen parallel zu dem Grundkörper 36 erstreckt. Das Trägerelement 48 ist über eine Mehrzahl von Verbindungselementen 50 mit dem Grundkörper 36 des zweiten Schienenelements 14 verbunden. Die Verbindungselemente 50 erstrecken sich in dem gezeigten Ausführungsbeispiel eines Schienensystems 10 parallel zueinander und im Wesentlichen senkrecht zu dem Grundkörper 36 und dem Trägerelement 48 des zweiten Schienenelements 14. Es versteht sich jedoch, dass auch andere Ausgestaltungen und Anordnungen der Verbindungselemente 50 möglich sind.

Ähnlich wie das erste Schienenelement 12 ist auch das zweite Schienenelement 14 mit einer Führungseinrichtung 52 versehen, die eine Führungsschiene 54 mit einem in Form eines abgeflachten Kreises ausgebildeten Querschnitt umfasst. Anders als bei dem ersten Schienenelement 12 ist die Führungseinrichtung 52 jedoch nicht im Bereich der zweiten Oberfläche 40 des Grundkörpers 36 des zweiten Schienenelements 14, sondern im Bereich einer zu der zweiten Oberfläche 40 des Grundkörpers 36 parallelen Oberfläche 56 des Trägerelements 48 des zweiten Schienenelements 14 angeordnet.

Schließlich umfasst das zweite Schienenelement 14 eine in Form einer Montageschiene ausgebildete Montagevorrichtung 58, die dazu dient, ein in Figur 5c veranschaulichtes Anschlagelement 60 in verschiedenen Positionen entlang einer Längsachse L des Schienensystems 10 in verschiedenen Positionen an dem Schienensystem 10 zu befestigen. Die Montagevorrichtung 58 ist an den den Grundkörper 36 mit dem Trägerelement 48 des zweiten Schienenelements 14 verbindenden Verbindungselementen 50 befestigt und erstreckt sich im Wesentlichen über die gesamte Länge des zweiten Schienenelements 14.

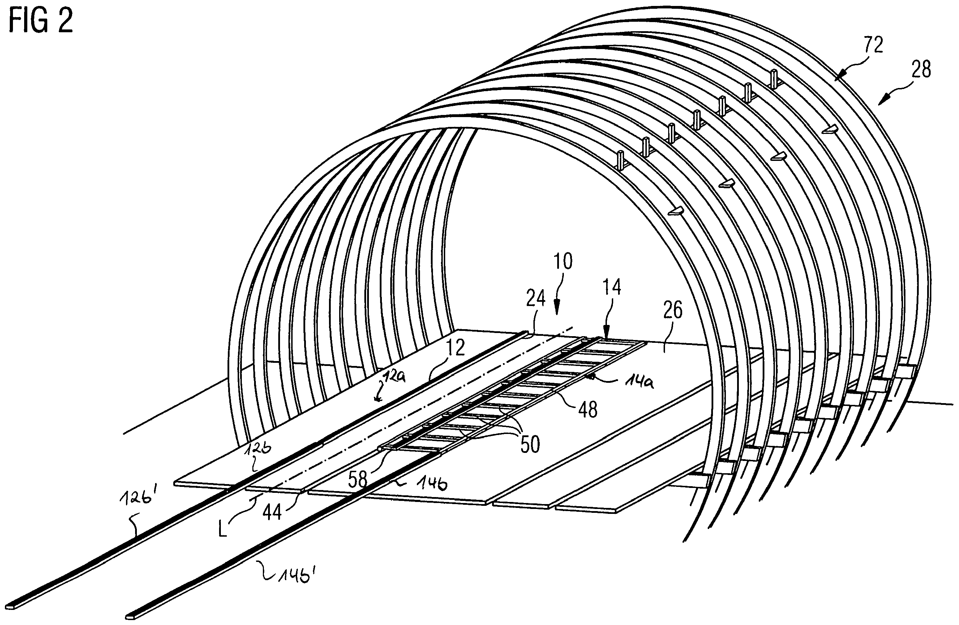

Wie am Besten aus den Figuren 1 und 2 ersichtlich wird, kann das erste Schienenelement 12 auf einfache und komfortable Art und Weise in dem Flugzeugrumpfelement 28 montiert werden, indem die an dem ersten Schienenelement 12 ausgebildete Befestigungsvorrichtung 22 mit der in Form einer Sitzschiene ausgebildeten ersten Befestigungsvorrichtung 24 des Flugzeugrumpfelements 28 in Eingriff gebracht wird. In ähnlicher Weise kann das zweite Schienenelement 24 auf einfache Art und Weise in dem Flugzeugrumpfelement 28 montiert werden, indem die an den zweiten Schienenelementen 14 ausgebildete Befestigungsvorrichtung 42 mit der ebenfalls in Form einer Sitzschiene ausgebildeten zweiten Befestigungsvorrichtung 44 des Flugzeugrumpfelements 28 in Eingriff gebracht wird. Auf die Bereitstellung separater Befestigungsvorrichtungen in dem Flugzeugrumpfelement 28 zur Befestigung der Schienenelemente 12, 14 kann somit verzichtet werden. Es versteht sich, dass die Befestigung der Schienenelemente 12, 14 in dem Flugzeugrumpfelement 28 lösbar erfolgt, so dass die Schienenelemente 12, 14 zu einem späteren Zeitpunkt problemlos wieder demontiert und aus dem Flugzeugrumpfelement 28 entfernt werden können.

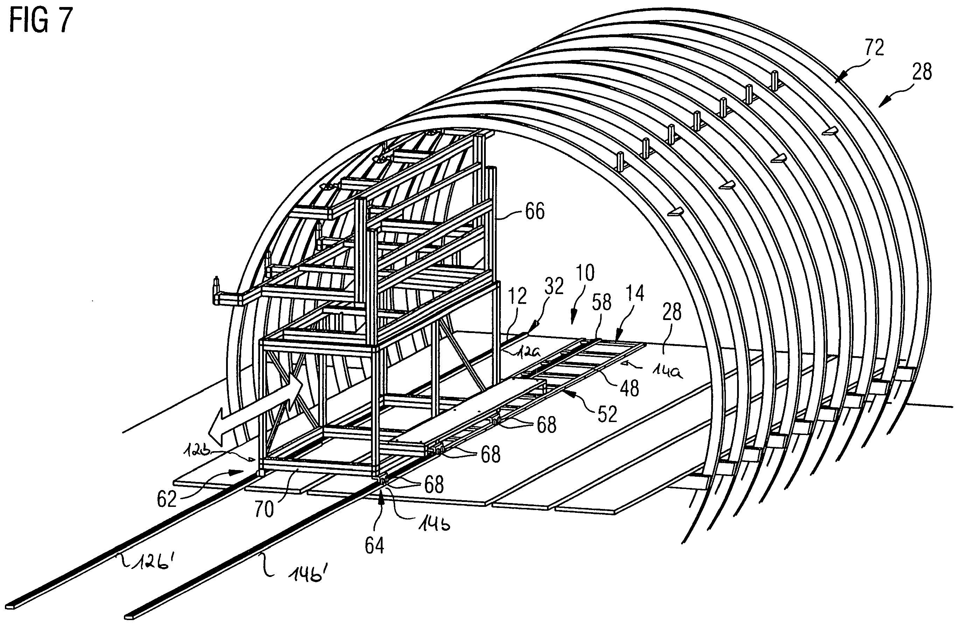

Im in dem Flugzeugrumpfelement 28 montierten Zustand stellt das Schienensystem 10 zwei sich parallel zueinander erstreckende Führungseinrichtungen 32, 52 bereit, deren Abstand nicht an den Abstand der ersten und der zweiten Befestigungsvorrichtung 24, 42 des Flugzeugrumpfelements 28 gekoppelt ist. Vielmehr ist die Anordnung der Führungseinrichtungen 32, 52 der Schienenelemente 12, 14 an die Anordnung erster und zweiter Führungseinrichtungen 62, 64 angepasst, die an einer Transportvorrichtung 66 zum Transportieren einer zur Montage in dem Flugzeugrumpfelement 28 vorgesehenen Komponente in dem Flugzeugrumpfelement 28 vorgesehen sind (siehe Figur 7). Die erste Führungseinrichtung 62 der Transportvorrichtung 66 umfasst, ebenso wie die zweite Führungseinrichtung 64 der Transportvorrichtung 66 eine Mehrzahl von Rollen 68, die an einem Basisgestell 70 der Transportvorrichtung 66 montiert sind.

In einer Umfangsfläche der Rollen 68 ist jeweils eine in den Figuren nicht dargestellte Nut ausgebildet, deren Form an den Querschnitt der Führungsschienen 34, 54 der Führungseinrichtungen 32, 52 angepasst ist. Bei einer Verschiebung der Transportvorrichtung 66 relativ zu dem Schienensystem 10 sind die Führungsschienen 34, 54 der Führungseinrichtungen 32, 52 somit in den in den Umfangsflächen der Rollen 68 der ersten und der zweiten Führungseinrichtung 62, 64 der Transportvorrichtung 66 ausgebildeten Nuten aufgenommen. Dies ermöglicht eine geführte Verschiebung der Transportvorrichtung 66 relativ zu dem Schienensystem 10 entlang der Längsachse L des Schienensystems 10. Die Transportvorrichtung 66 wird dadurch, ebenso wie eine auf der Transportvorrichtung 66 transportierte Komponente in einem definierten Abstand zu einer Struktur 72 des Flugzeugrumpfelements 28 gehalten.

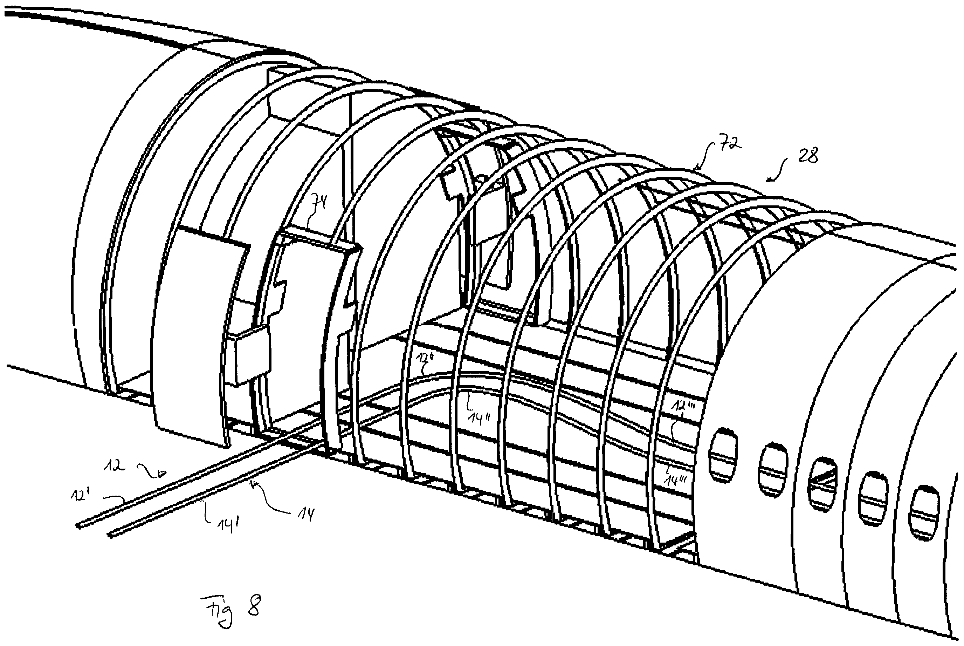

Figur 8 zeigt eine Ausführungsform eines Schienensystems 10, bei dem das erste und das zweite Schienenelement 12, 14 abschnittsweise eine gekrümmte Grundform aufweisen. Insbesondere weisen die Schienenelemente 12, 14 jeweils einen sich im Wesentlichen senkrecht zu einer Längsachse des Flugzeugrumpfelements erstreckenden ersten Abschnitt 12', 14', einem gekrümmten zweiten Abschnitt 12", 14" sowie einem sich im Wesentlichen parallel zu der Längsachse des Flugzeugrumpfelements erstreckenden dritten Abschnitt 12"', 14"' auf. Dadurch können die Schienenelemente 12, 14 des Schienensystems 10 durch eine in dem Flugzeugrumpfelement 28 ausgebildete Seitentür 74 in das Flugzeugrumpfelement 28 hineingeführt und anschließend in dem Flugzeugrumpfelement 28 parallel zur Längsachse des Flugzeugrumpfelements 28 geführt werden. Folglich ist das Einfahren eines Montagehilfsmittels, beispielsweise einer Transportvorrichtung 66, siehe Figur 7, durch die Seitentür 74 in das Flugzeugrumpfelement 28 möglich.

In der Darstellung gemäß Figur 8 weisen das erste und das zweite Schienenelement 12, 14 jeweils lediglich einen Grundkörper auf. Es versteht sich jedoch, dass auch Schienenelemente 12, 14 mit einer abschnittsweise gekrümmten Grundform wie oben beschrieben gestaltet und beispielsweise mit einem Trägerelement ausgestattet sein können. Die oben im Zusammenhang mit der Anordnung gemäß den Figuren 1 bis 7 beschriebenen Merkmale sind daher ohne Einschränkungen auf die Anordnung gemäß Figur 8 übertragbar.

## Patentansprüche

1. Schienensystem (10) zur Verwendung bei der Montage einer Komponente in einem Flugzeug, welches umfasst:
- ein erstes Schienenelement (12) mit einer Befestigungsvorrichtung (22), die komplementär zu einer im Bereich eines Bodens eines Flugzeugrumpfelements (28) vorgesehenen ersten Befestigungsvorrichtung (24) ausgebildet und dazu eingerichtet ist, mit der ersten Befestigungsvorrichtung (24) zusammenzuwirken, um das erste Schienenelement (12) lösbar im Bereich des Bodens des Flugzeugrumpfelements (28) zu befestigen, wobei ein Abschnitt (12b') des ersten Schienenelements (12) im mit dem Flugzeugrumpfelement (28) verbundenen Zustand des ersten Schienenelements (12) über einen Rand des Bodens des Flugzeugrumpfelements (28) hinausragt und dazu geeignet ist, sich über einen Boden einer Montagehalle zu erstrecken, und einer Führungseinrichtung (32), die komplementär zu einer an einem in das Flugzeugrumpfelement (28) einzufahrenden Montagehilfsmittel (66) vorgesehenen ersten Führungseinrichtung (62) ausgebildet und dazu eingerichtet ist, mit der ersten Führungseinrichtung (62) zusammenzuwirken, um eine geführte Verschiebung des in das Flugzeugrumpfelement (28) einzufahrenden Montagehilfsmittels (66) relativ zu dem Schienensystem (10) zu ermöglichen, und
- ein zweites Schienenelement (14) mit einer Befestigungsvorrichtung (42), die komplementär zu einer im Bereich des Bodens des Flugzeugrumpfelements (28) vorgesehenen zweiten Befestigungsvorrichtung (44) ausgebildet und dazu eingerichtet ist, mit der zweiten Befestigungsvorrichtung (44) zusammenzuwirken, um das zweite Schienenelement (14) lösbar im Bereich des Bodens des Flugzeugrumpfelements (28) zu befestigen, wobei ein Abschnitt (14b') des zweiten Schienenelements (14) im mit dem Flugzeugrumpfelement (28) verbundenen Zustand des zweiten Schienenelements (14) über einen Rand des Bodens des Flugzeugrumpfelements (28) hinausragt und dazu geeignet ist, sich über einen Boden einer Montagehalle zu erstrecken, und einer Führungseinrichtung (52), die komplementär zu einer an einem in das Flugzeugrumpfelement (28) einzufahrenden Montagehilfsmittel (66) vorgesehenen zweiten Führungseinrichtung (64) ausgebildet und dazu eingerichtet ist, mit der zweiten Führungseinrichtung (52) zusammenzuwirken, um eine geführte Verschiebung des in das Flugzeugrumpfelement (28) einzufahrenden Montagehilfsmittels (66) relativ zu dem Schienensystem (10) zu ermöglichen.

2. Schienensystem nach Anspruch 1,
**dadurch gekennzeichnet, dass** das erste Schienenelement (12) zweiteilig ausgebildet ist, wobei ein Abschnitt (12a) des ersten Schienenelements (12) im mit dem Flugzeugrumpfelement (28) verbundenen Zustand des ersten Schienenelements (12) vollständig in dem Flugzeugrumpfelement (28) aufgenommen ist und ein Abschnitt (12b) des ersten Schienenelements (12) über den Rand des Bodens des Flugzeugrumpfelements (28) hinausragt, und/oder dass das zweite Schienenelement (14) zweiteilig ausgebildet ist, wobei ein Abschnitt (14a) des zweiten Schienenelements (14) im mit dem Flugzeugrumpfelement (28) verbundenen Zustand des zweiten Schienenelements (14) vollständig in dem Flugzeugrumpfelement (28) aufgenommen ist und ein Abschnitt (14b) des zweiten Schienenelements (14) über den Rand des Bodens des Flugzeugrumpfelements (28) hinausragt.

3. Schienensystem nach Anspruch 1 oder 2,
**dadurch gekennzeichnet, dass** die Befestigungsvorrichtung (22) des ersten Schienenelements (12) komplementär zu einer in Form einer Sitzschiene ausgeführten ersten Befestigungsvorrichtung (24) des Flugzeugrumpfelements (28) ausgebildet ist und/oder dass die Befestigungsvorrichtung (42) des zweiten Schienenelements (14) komplementär zu einer in Form einer Sitzschiene ausgeführten zweiten Befestigungsvorrichtung (44) des Flugzeugrumpfelements (28) ausgebildet ist.

4. Schienensystem nach einem der Ansprüche 1 bis 3,
**dadurch gekennzeichnet, dass** das erste Schienenelement (12) einen Grundkörper (16) umfasst, an dem die Befestigungsvorrichtung (22) des ersten Schienenelements (12) angebracht ist, und/oder dass das zweite Schienenelement (14) einen Grundkörper (36) umfasst, an dem die Befestigungsvorrichtung (42) des zweiten Schienenelements (14) angebracht ist.

5. Schienensystem nach Anspruch 4,
**dadurch gekennzeichnet, dass** das erste Schienenelement (12) ein Trägerelement umfasst, das über mindestens ein Verbindungselement mit dem Grundkörper (16) des ersten Schienenelements (12) verbunden ist, und/oder dass das zweite Schienenelement (14) ein Trägerelement (48) umfasst, das über mindestens ein Verbindungselement (50) mit dem Grundkörper (36) des zweiten Schienenelements (14) verbunden ist.

6. Schienensystem nach Anspruch 5,
**dadurch gekennzeichnet, dass** sich das Trägerelement des ersten Schienenelements (12) im Wesentlichen parallel zu dem Grundkörper (16) des ersten Schienenelements (12) erstreckt und/oder dass sich das Trägerelement (48) des zweiten Schienenelements (14) im Wesentlichen parallel zu dem Grundkörper (36) des zweiten Schienenelements (14) erstreckt.

7. Schienensystem nach einem der Ansprüche 4 bis 6,
**dadurch gekennzeichnet, dass** die Führungseinrichtung (32) des ersten Schienenelements (12) an dem Grundkörper (16) und/oder dem Trägerelement des ersten Schienenelements (12) angebracht ist und/oder dass die Führungseinrichtung (52) des zweiten Schienenelements (14) an dem Grundkörper (36) und/oder dem Trägerelement (48) des zweiten Schienenelements (14) angebracht ist.

8. Schienensystem nach einem der Ansprüche 1 bis 7,
**dadurch gekennzeichnet, dass** die Führungseinrichtung (32) des ersten Schienenelements (12) und/oder die Führungseinrichtung (52) des zweiten Schienenelements (14) eine Führungsschiene (34, 54) umfasst/umfassen, die dazu eingerichtet ist, mit einer Rolle (68) der an dem in das Flugzeugrumpfelement (28) einzufahrenden Montagehilfsmittel (66) vorgesehenen ersten und/oder zweiten Führungseinrichtung (62, 64) in Eingriff zu gelangen.

9. Schienensystem nach einem der Ansprüche 1 bis 8,
**gekennzeichnet durch** ein Anschlagelement (60), das dazu eingerichtet ist, im in einem Flugzeugrumpfelement (28) montierten Zustand des Schienensystems (10) mit dem in das Flugzeugrumpfelement (28) einzufahrenden Montagehilfsmittel (66) zusammenzuwirken, um die geführte Verschiebung des in das Flugzeugrumpfelement (28) einzufahrenden Montagehilfsmittels (66) relativ zu dem Schienensystem (10) zu begrenzen, wobei das Anschlagelement (60) mittels einer Montagevorrichtung (58) in verschiedenen Positionen an dem Schienensystem (10) befestigbar ist.

10. Schienensystem nach Anspruch 9,
**dadurch gekennzeichnet, dass** die Montagevorrichtung (58) an einem Verbindungselement (50) zur Verbindung des Grundkörper (16, 36) des ersten und/oder des zweiten Schienenelements (12, 14) mit dem Trägerelement (48) des ersten und/oder des zweiten Schienenelements (12, 14) angebracht ist.

11. Schienensystem nach einem der Ansprüche 1 bis 10,
**dadurch gekennzeichnet, dass** das erste Schienenelement (12) zumindest abschnittsweise eine gekrümmte Grundform aufweist und/oder das zweite Schienenelements (14) zumindest abschnittsweise eine gekrümmte Grundform aufweist.

12. Verfahren zur Montage einer Komponente in einem Flugzeug mit den Schritten:
- Befestigen des ersten und des zweiten Schienenelements (12, 14) des Schienensystems (10) nach einem der Ansprüche 1 bis 11 in einem Flugzeugrumpfelement (28), und
- Einfahren eines Montagehilfsmittels (66) in das Flugzeugrumpfelement (28), wobei die an dem in das Flugzeugrumpfelement (28) einzufahrenden Montagehilfsmittel (66) vorgesehene erste Führungseinrichtung (62) mit der komplementären Führungseinrichtung (32) des ersten Schienenelements (12) zusammenwirkt und die an dem in das Flugzeugrumpfelement (28) einzufahrenden Montagehilfsmittel (66) vorgesehene zweite Führungseinrichtung (64) mit der komplementären Führungseinrichtung (52) des zweiten Schienenelements (14) zusammenwirkt, um eine geführte Verschiebung des in das Flugzeugrumpfelement (28) einzufahrenden Montagehilfsmittels (66) relativ zu dem Schienensystem (10) zu ermöglichen.

13. Verfahren nach Anspruch 12,
**gekennzeichnet durch** die Schritte:
- Montieren der Komponente in dem Flugzeugrumpfelement (28) mit Hilfe des Montagehilfsmittels (66),
- Herausfahren des Montagehilfsmittels (66) aus dem Flugzeugrumpfelement (28), wobei die an dem aus dem Flugzeugrumpfelement (28) herauszufahrenden Montagehilfsmittel (66) vorgesehene erste Führungseinrichtung (62) mit der komplementären Führungseinrichtung (32) des ersten Schienenelements (12) zusammenwirkt und die an dem aus dem Flugzeugrumpfelement (28) herauszufahrenden Montagehilfsmittel (66) vorgesehene zweite Führungseinrichtung (64) mit der komplementären Führungseinrichtung (52) des zweiten Schienenelements (14) zusammenwirkt, um eine geführte Verschiebung des aus Flugzeugrumpfelement (28) herauszufahrenden Montagehilfsmittels (66) relativ zu dem Schienensystem (10) zu ermöglichen, und
- Lösen des ersten und des zweiten Schienenelements (12, 14) des Schienensystems (10) von dem Flugzeugrumpfelement (28).

14. System zur Montage einer Komponente in einem Flugzeug mit:
- einem Schienensystems (10) nach einem der Ansprüche 1 bis 11, und
- einem zum Zusammenwirken mit dem Schienensystem (10) ausgebildeten Montagehilfsmittel (66).

15. System nach Anspruch 14,
**dadurch gekennzeichnet, dass** das Montagehilfsmittel (66) in Form eines Transportwagens zum Transport der Komponente in ein Flugzeugrumpfelement (28) ausgebildet ist.

## Claims

1. A rail system (10) for use when assembling a component in an aircraft, which comprises:
- a first rail element (12) having a securing device (22) which is designed to be complementary to a first securing device (24) provided in the region of a floor of an aircraft fuselage element (28) and is adapted to cooperate with the first securing device (24) in order to releasably secure the first rail element (12) in the region of the floor of the aircraft fuselage element (28), wherein a section (12b') of the first rail element (12) projects beyond an edge of the floor of the aircraft fuselage element (28) and is adapted to extend over a floor of an assembly hangar in the connected state of the first rail element (12) and the aircraft fuselage element (28), and having a guide device (32), which is designed to be complementary to a first guide device (62) provided on an assembly aid (66), which is to be introduced into the aircraft fuselage element (28), and is adapted to cooperate with the first guide device (62) to enable a guided displacement of the assembly aid (66) to be introduced into the aircraft fuselage element (28) relative to the rail system (10), and
- a second rail element (14) having a securing device (42) which is designed to be complementary to a second securing device (44) provided in the region of the floor of the aircraft fuselage element (28) and is adapted to cooperate with the second securing device (44) in order to releasably secure the second rail element (14) in the region of the floor of the aircraft fuselage element (28), wherein a section (14b') of the second rail element (14) projects beyond an edge of the floor of the aircraft fuselage element (28) and is adapted to extend over a floor of an assembly hangar in the connected state of the second rail element (14) and the aircraft fuselage element (28), and having a guide device (52), which is designed to be complementary to a second guide device (64) provided on an assembly aid (66), which is to be introduced into the aircraft fuselage element (28), and is adapted to cooperate with the second guide device (52) to enable a guided displacement of the assembly aid (66) to be introduced into the aircraft fuselage element (28) relative to the rail system (10).

2. A rail system according to Claim 1,
**characterised in that** the first rail element (12) is constructed in two parts, wherein a first section (12a) of the first rail element (12) is received completely in the aircraft fuselage element (28) in the connected state of the first rail element (12) and the aircraft fuselage element (28), and a section (12b) of the first rail element (12) projects beyond the edge of the floor of the aircraft fuselage element (28), and/or **in that** the second rail element (14) is constructed in two parts, wherein a section (14a) of the second rail element (14) is received completely in the aircraft fuselage element (28) in the connected state of the second rail element (14) and the aircraft fuselage element (28) and a section (14b) of the second rail element (14) projects beyond the edge of the floor of the aircraft fuselage element (28).

3. A rail system according to Claim 1 or 2,
**characterised in that** the securing device (22) of the first rail element (12) is designed to be complementary to a first securing device (24) of the aircraft fuselage element (28) which is constructed in the form of a seat rail, and/or **in that** the securing device (42) of the second rail element (14) is designed to be complementary to a second securing device (44) of the aircraft fuselage element (28) which is constructed in the form of a seat rail.

4. A rail system according to one of Claims 1 to 3,
**characterised in that** the first rail element (12) comprises a base body (16) on which the securing device (22) of the first rail element (12) is mounted, and/or **in that** the second rail element (14) comprises a base body (36) on which the securing device (42) of the second rail element (14) is mounted.

5. A rail system according to Claim 4,
**characterised in that** the first rail element (12) comprises a support element which is connected to the base body (16) of the first rail element (12) by way of at least one connecting element, and/or **in that** the second rail element (14) comprises a support element (48) which is connected to the base body (36) of the second rail element (14) by way of at least one connecting element (50).

6. A rail system according to Claim 5,
**characterised in that** the support element of the first rail element (12) extends substantially parallel to the base body (16) of the first rail element (12) and/or **in that** the support element (48) of the second rail element (14) extends substantially parallel to the base body (36) of the second rail element (14).

7. A rail system according to one of Claims 4 to 6,
**characterised in that** the guide device (32) of the first rail element (12) is mounted on the base body (16) and/or the support element of the first rail element (12) and/or **in that** the guide device (52) of the second rail element (14) is mounted on the base body (36) and/or the support element (48) of the second rail element (14).

8. A rail system according to one of Claims 1 to 7,
**characterised in that** the guide device (32) of the first rail element (12) and/or the guide device (52) of the second rail element (14) comprise(s) a guide rail (34, 54) which is designed to come into engagement with a roller (68) of the first and/or second guide device (62, 64) provided on the assembly aid (66) to be introduced into the aircraft fuselage element (28).

9. A rail system according to one of Claims 1 to 8,
**characterised by** a stop element (60) which is designed such that, in the assembled state of the rail system (10) in an aircraft fuselage element (28), it cooperates with the assembly aid (66) to be introduced into the aircraft fuselage element (28) in order to delimit the guided displacement of the assembly aid (66) to be introduced into the aircraft fuselage element (28) relative to the rail system (10), wherein the stop element (60) can be secured in various positions on the rail system (10) by means of an assembly device (58).

10. A rail system according to Claim 9,
**characterised in that** the assembly device (58) is mounted on a connecting element (50) for connecting the base body (16, 36) of the first and/or the second rail element (12, 14) to the support element (48) of the first and/or the second rail element (12, 14).

11. A rail system according to one of Claims 1 to 10,
**characterised in that** the first rail element (12) has a curved basic shape, at least in sections, and/or the second rail element (14) has a curved basic shape, at least in sections.

12. A method for assembling a component in an aircraft having the steps:
- securing the first and the second rail element (12, 14) of the rail system (10) according to one of Claims 1 to 11 in an aircraft fuselage element (28), and
- introducing an assembly aid (66) into the aircraft fuselage element (28),
wherein the first guide device (62) provided on the assembly aid (66) to be introduced into the aircraft fuselage element (28) cooperates with the complementary guide device (32) of the first rail element (12) and the second guide device (64) provided on the assembly aid (66) to be introduced into the aircraft fuselage element (28) cooperates with the complementary guide device (52) of the second rail element (14) in order to enable a guided displacement of the assembly aid (66) to be introduced into the aircraft fuselage element (28) relative to the rail system (10).

13. A method according to Claim 12,
**characterised by** the steps:
- assembling the component in the aircraft fuselage element (28) with the aid of the assembly aid (66),
- removing the assembly aid (66) from the aircraft fuselage element (28),
wherein the first guide device (62) provided on the assembly aid (66) to be removed from the aircraft fuselage element (28) cooperates with the complementary guide device (32) of the first rail element (12) and the second guide device (64) provided on the assembly aid (66) to be removed from the aircraft fuselage element (28) cooperates with the complementary guide device (52) of the second rail element (14) in order to enable a guided displacement of the assembly aid (66) to be removed from the aircraft fuselage element (28) relative to the rail system (10), and
- releasing the first and the second rail element (12, 14) of the rail system (10) from the aircraft fuselage element (28).

14. A system for assembling a component in an aircraft having:
- a rail system (10) according to one of Claims 1 to 11, and
- an assembly aid (66) constructed to cooperate with the rail system (10).

15. A system according to Claim 14,
**characterised in that** the assembly aid (66) is constructed in the form of a transport carriage for transporting the component into an aircraft fuselage element (28).

## Revendications

1. Système de rails (10) destiné à être utilisé lors du montage d'une pièce dans un avion et comportant :
- un premier élément de rail (12) pourvu d'un dispositif de fixation (22) qui est réalisé de manière complémentaire à un premier dispositif de fixation (24) prévu dans la zone d'un plancher d'un élément de fuselage d'avion (28) et qui est conçu pour coopérer avec le premier dispositif de fixation (24) pour fixer le premier élément de rail (12) de manière amovible dans la zone du plancher de l'élément de fuselage d'avion (28), un segment (12b') du premier élément de rail (12) faisant saillie au-delà d'un bord du plancher de l'élément de fuselage d'avion (28) lorsque le premier élément de rail (12) est relié à l'élément de fuselage d'avion (28), et étant apte à s'étendre sur un plancher d'un hall de montage, et pourvu d'un dispositif de guidage (32) qui est réalisé de manière complémentaire à un premier dispositif de guidage (62) prévu sur un élément d'aide au montage (66) à introduire dans l'élément de fuselage d'avion (28) et qui est conçu pour coopérer avec le premier dispositif de guidage (62) pour permettre à l'élément d'aide au montage (66) qui est introduit dans l'élément de fuselage d'avion (28) de coulisser de manière guidée par rapport au système de rails (10), et
- un second élément de rail (14) pourvu d'un dispositif de fixation (42) qui est réalisé de manière complémentaire à un second dispositif de fixation (44) prévu dans la zone du plancher de l'élément de fuselage d'avion (28) et qui est conçu pour coopérer avec le second dispositif de fixation (44) pour fixer le second élément de rail (14) de manière amovible dans la zone du plancher de l'élément de fuselage d'avion (28), un segment (14b') du second élément de rail (14) faisant saillie au-delà d'un bord du plancher de l'élément de fuselage d'avion (28) lorsque le second élément de rail (12) est relié à l'élément de fuselage d'avion (28), et étant apte à s'étendre sur un plancher d'un hall de montage, et pourvu d'un dispositif de guidage (52) qui est réalisé de manière complémentaire à un second dispositif de guidage (64) prévu sur un élément d'aide au montage (66) à introduire dans l'élément de fuselage d'avion (28), et qui est conçu pour coopérer avec le second dispositif de guidage (52) pour permettre à l'élément d'aide au montage (66), qui est introduit dans l'élément de fuselage d'avion (28), de coulisser de manière guidée par rapport au système de rails (10).

2. Système de rails selon la revendication 1,
**caractérisé en ce que** le premier élément de rail (12) est réalisé en deux parties, un segment (12a) du premier élément de rail (12) étant intégralement logé dans l'élément de fuselage d'avion (28) lorsque le premier élément de rail (12) est relié à l'élément de fuselage d'avion (28) et un segment (12b) du premier élément de rail (12) faisant saillie au-delà du bord du plancher de l'élément de fuselage d'avion (28), et/ou **en ce que** le second élément de rail (14) est réalisé en deux parties, un segment (14a) du second élément de rail (14) étant intégralement logé dans l'élément de fuselage d'avion (28) lorsque le second élément de rail (14) est relié à l'élément de fuselage d'avion (28), et un segment (14b) du second élément de rail (14) faisant saillie au-delà du bord du plancher de l'élément de fuselage d'avion (28).

3. Système de rails selon la revendication 1 ou 2,
**caractérisé en ce que** le dispositif de fixation (22) du premier élément de rail (12) est réalisé de manière complémentaire à un premier dispositif de fixation (24) de l'élément de fuselage d'avion (28) réalisé sous la forme d'un rail de siège, et/ou **en ce que** le dispositif de fixation (42) du second élément de rail (14) est réalisé de manière complémentaire à un second dispositif de fixation (44) de l'élément de fuselage d'avion (28) réalisé sous la forme d'un rail de siège.

4. Système de rails selon l'une des revendications de 1 à 3,
**caractérisé en ce que** le premier élément de rail (12) comporte un corps de base (16) sur lequel est monté le dispositif de fixation (22) du premier élément de rail (12), et/ou **en ce que** le second élément de rail (14) comporte un corps de base (36) sur lequel est monté le dispositif de fixation (42) du second élément de rail (14).

5. Système de rails selon la revendication 4,
**caractérisé en ce que** le premier élément de rail (12) comporte un élément de support qui est relié par le biais d'au moins d'un élément de liaison au corps de base (16) du premier élément de rail (12), et/ou **en ce que** le second élément de rail (14) comporte un élément de support (48) qui est relié par le biais d'au moins d'un élément de liaison (50) au corps de base (16) du second élément de rail (14).

6. Système de rails selon la revendication 5,
**caractérisé en ce que** l'élément de support du premier élément de rail (12) s'étend sensiblement parallèlement au corps de base (16) du premier élément de rail (12) et/ou **en ce que** l'élément de support du second élément de rail (14) s'étend sensiblement parallèlement au corps de base (36) du second élément de rail (14).

7. Système de rails selon l'une des revendications de 4 à 6,
**caractérisé en ce que** le dispositif de guidage (32) du premier élément de rail (12) est monté sur le corps de base (16) et/ou sur l'élément de support du premier élément de rail (12), et/ou **en ce que** le dispositif de guidage (52) du second élément de rail (14) est monté sur le corps de base (36) et/ou sur l'élément de support du second élément de rail (14).

8. Système de rails selon l'une des revendications de 1 à 7,
**caractérisé en ce que** le dispositif de guidage (32) du premier élément de rail (12) et/ou le dispositif de guidage (52) du second élément de rail (14) comporte/comportent un rail de guidage (34, 54) qui est conçu pour venir en prise avec un galet (68) du premier et/ou second dispositif de guidage (62, 64) prévu sur l'élément d'aide au montage (66) qui est introduit dans l'élément de fuselage d'avion (28).

9. Système de rails selon l'une des revendications de 1 à 8,
**caractérisé par** un élément de butée (60) qui est conçu pour coopérer avec l'élément d'aide au montage (66) qui est introduit dans l'élément de fuselage d'avion (28) lorsque le système de rails (10) est monté dans un élément de fuselage d'avion (28) pour limiter le déplacement guidé de l'élément d'aide au montage (66) à introduire dans l'élément de fuselage d'avion (28) par rapport au système de rails (10), cet élément de butée (60) pouvant être fixé dans différentes positions sur le système de rails (10) au moyen d'un dispositif de montage (58).

10. Système de rails selon la revendication 9,
**caractérisé en ce que** le dispositif de montage (58) est monté sur un élément de liaison (50) servant à assurer la jonction du corps de base (16, 36) du premier et/ou du second élément de rail (12, 14) avec l'élément de support (48) du premier et/ou du second élément de rail (12, 14).

11. Système de rails selon l'une des revendications de 1 à 10,
**caractérisé en ce que** le premier élément de rail (12) présente au moins partiellement une forme de base courbée et/ou le second élément de rail (14) présente au moins partiellement une forme de base courbée.

12. Procédé de montage d'une pièce dans un avion comportant les étapes suivantes
- la fixation du premier et du second élément de rail (12, 14) du système de rails (10) selon l'une des revendications 1 à 11 dans un élément de fuselage d'avion (28), et
- l'introduction d'un élément d'aide au montage (66) dans l'élément de fuselage d'avion (28), le premier dispositif de guidage (62) prévu sur l'élément d'aide au montage (66) à introduire dans l'élément de fuselage d'avion (28) coopérant avec le dispositif de guidage (32) complémentaire du premier élément de rail (12), et le second dispositif de guidage (64) prévu sur l'élément d'aide au montage (66) à introduire dans l'élément de fuselage d'avion (28) coopérant avec le dispositif de guidage (52) complémentaire du second élément de rail (14) pour permettre à l'élément d'aide au montage (66) à introduire dans l'élément de fuselage d'avion (28) de coulisser de manière guidée par rapport au système de rails (10).

13. Procédé selon la revendication 12,
**caractérisé par** les étapes suivantes :
- le montage de la pièce dans l'élément de fuselage d'avion (28) à l'aide de l'élément d'aide au montage (66),
- la sortie de l'élément d'aide au montage (66) de l'élément de fuselage d'avion (28), le premier dispositif de guidage (62) prévu sur l'élément d'aide au montage (66) à sortir de l'élément de fuselage d'avion (28) coopérant avec le dispositif de guidage (32) complémentaire du premier élément de rail (12), et le second dispositif de guidage (64) prévu sur l'élément d'aide au montage (66) à sortir de l'élément de fuselage d'avion (28) coopérant avec le dispositif de guidage (52) complémentaire du second élément de rail (14) pour permettre à l'élément d'aide au montage (66) à sortir de l'élément de fuselage d'avion (28) de coulisser de manière guidée par rapport au système de rails (10), et
- le détachement du premier et du second élément de rail (12, 14) du système de rails (10) de l'élément de fuselage d'avion (28).

14. Système destiné au montage d'une pièce dans un avion, comportant :
- un système de rails (10) selon l'une des revendications 1 à 11, et
- un élément d'aide au montage (66) conçu pour coopérer avec le système de rails (10).

15. Système selon la revendication 14,
**caractérisé en ce que** l'élément d'aide au montage (66) est réalisé sous la forme d'un chariot de transport pour transporter la pièce dans l'élément de fuselage d'avion (28).
